(19) Europäisches Patentamt
European Patent Office
Office européen des brevets

(11) EP 3 805 003 A1

(12) EUROPEAN PATENT APPLICATION

(43) Date of publication:
**14.04.2021 Bulletin 2021/15**

(21) Application number: **19202702.7**

(22) Date of filing: **11.10.2019**

(51) Int Cl.:
***B41M 5/323*** *(2006.01)* ***B41M 5/333*** *(2006.01)*
***C09D 11/00*** *(2014.01)* *B41M 5/337* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AGFA NV**
**2640 Mortsel (BE)**

(72) Inventors:
- **LEHERICEY, Marie**
  **2640 Mortsel (BE)**
- **LIGOT, Amandine**
  **2640 Mortsel (BE)**
- **REEB, Charles**
  **2640 Mortsel (BE)**
- **GOETHALS, Fabienne**
  **2640 Mortsel (BE)**
- **WYNANTS, Sonny**
  **2640 Mortsel (BE)**

(74) Representative: **Viaene, Kris**
**AGFA NV**
**Intellectual Property Department**
**Septestraat 27**
**2640 Mortsel (BE)**

# (54) LASER MARKABLE ARTICLES

(57) A radiation curable laser markable composition comprising a polymerizable compound, a leuco dye, a developing agent, and optional optothermal converting agent, characterized in that the leuco dye is included in the composition as a dispersion.

EP 3 805 003 A1

## Description

### Technical field of the Invention

The present invention relates to laser markable articles and to laser markable compositions wherewith such articles may be prepared.

### Background art for the invention

Various substrates, for example paper, paperboard or plastics, are very often marked with information such as logos, bar codes, expiry dates or batch numbers.

Tradionally, the marking of these substrates has been achieved by various printing techniques, such as for example inkjet or thermal transfer printing.

However, for some applications, these printing techniques are more and more replaced by laser marking as laser marking is cheaper in terms of overall economics and shows performance benefits such as high speed and contact free marking, marking of substrates with uneven surfaces, creation of marks that are so small that they are invisible or nearly invisible to the human eye, and creation of marks in the substrate rather than on the substrate.

Laser marking is typically carried out by applying a laser markable composition on a substrate followed by an image-wise laser exposure.

The laser markable composition may be applied on the substrate by inkjet printing, flexographic printing, rotogravure printing, offset printing or any other printing technique. Also, the laser markable composition may be applied on the substrate by any coating or spraying technique.

A flexographic ink may be radiation curable. With such radiation curable flexographic inks, no solvents have to be evaporated after printing. Instead, solidification of the applied ink is the result of a polymerization reaction.

Typically, a laser markable composition includes a so-called optothermal converting agent that converts radiation energy into heat. In most cases infrared radiation is used for laser marking.

A laser markable composition includes a colour forming agent that forms a colour upon laser marking. Several colour forming agents are proposed.

A transition metal oxide, such as molybdenum trioxide, has been disclosed in WO2008/075101(Siltech).

An oxyanion of a multivalent metal, such as ammonium octyl molybdate, has been disclosed in WO2002/074548 and WO2007/012578 (both from Datalase).

These colour forming agents are capable of forming a black colour upon laser marking.

Diacetylene compounds, such as disclosed in WO2013/014436 (Datalase) are capable of forming multiple colours.

Leuco dyes are disclosed in for example WO2015/165854 (Agfa Gevaert).

Advantages of leuco dyes are a superior colour gamut that may be achieved by selecting the proper dyes.

A disadvantage of leuco dyes may be a limited daylight and temperature stability resulting in unwanted colour formation when a laser markable composition comprising them is stored.

There is thus a need for a laser marking composition comprising leuco dyes as colour forming agents and having an improved daylight and temperature stability.

### Summary of the invention

It is an object of the present invention to provide a laser markable article that combines superior colour gamut with sufficient daylight and temperature stability.

This object has been realised with the laser markable composition as defined in claim 1.

Further objects of the invention will become apparent from the description hereinafter.

### Detailed description of the invention

#### Definitions

Unless otherwise specified the term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethyl-propyl and 2-methylbutyl, etc.

Unless otherwise specified a substituted or unsubstituted alkyl group is preferably a $C_1$ to $C_6$-alkyl group.

Unless otherwise specified a substituted or unsubstituted alkenyl group is preferably a $C_2$ to $C_6$-alkenyl group.

Unless otherwise specified a substituted or unsubstituted alkynyl group is preferably a $C_2$ to $C_6$-alkynyl group.

Unless otherwise specified a substituted or unsubstituted aralkyl group is preferably a phenyl or naphthyl group including one, two, three or more $C_1$ to $C_6$-alkyl groups.

Unless otherwise specified a substituted or unsubstituted alkaryl group is preferably a $C_7$ to $C_{20}$-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulfonamide, -Cl, -Br, -I, -OH, -SH, -CN and $-NO_2$.

## The radiation curable laser markable composition

The radiation curable laser markable composition according to the present invention comprises a polymerizable compound, a leuco dye, a developing agent and an optional optothermal converting agent, characterized in that the leuco dye is included in the composition as a dispersion.

The radiation curable laser markable composition is preferably a UV curable laser markable composition.

The radiation curable laser markable composition is preferably a flexographic or inkjet ink, more preferably a UV curable flexographic or inkjet ink.

To optimize the coating or printing properties, and also depending on the application for which it is used, various additives may be added to the composition, such as surfactants, wetting/levelling agents, colorants, rheology modifiers, adhesion promoting compounds, biocides or antioxidants may be added to the radiation curable laser markable composition.

### Leuco dye

A leuco dye is a substantially colourless compound, which may form a coloured dye upon an inter- or intra-molecular reaction. The inter- or intra-molecular reaction may be triggered by heat, preferably heat formed during exposure with an IR laser.

Examples of leuco dyes are disclosed in WO2015/165854 (Agfa Gevaert), paragraph [069] to [093].

The leuco dye is included in the laser markable composition as a dispersion, preferably a dispersion in a polymerizable compound.

The leuco dye dispersion may be prepared by all commonly known dispersion methods.

A preferred method is a mechanical dispersion method including a bead milling step.

In such a method, the leuco dye is mixed with a dispersion medium to obtain a suspension. That suspension is then grinded in a bead mill to obtain a stable dispersion.

The dispersion medium preferably includes a polymerizable compound.

To obtain an optimal dispersion, the distance between Hansen parameters in Hansen space of the leuco dye and the polymerizable compound is preferably more than 4, more preferably more than 6.

The polymerizable compound is preferably selected from the group consisting of triethylene glycol dimethacrylate, 1,12 dodecanediol dimethacrylate, butyl ether acrylate, tripropylene glycol diacrylate, 2-(2-ethoxyethoxy)ethyl acrylate, dipropylene glycol diacrylate, ethoxylated trimethylolpropane triacrylate, isobornyl methacrylate, isobornyl acrylate, propoxylated neopentyl glycol diacrylate, ethyl acrylate, butyl acrylate, methyl acrylate, N-Acryloylmorpholine, iso octyl acrylate, propoxylated trimethylolpropane triacrylate, isodecyl acrylate, polycaprolactone acrylate, 2-ethylhexyl acrylate, hydroxyl acrylate monomer, 2-[[(butylamino) carbonyl]oxy]ethyl acrylate, lauryl acrylate, tridecyl acrylate, hydroxypropyl methacrylate, methacrylic acid, pentaerythritol triacrylate, and hydroxyethyl methacrylate.

A particularly preferred polymerizable compound is pentaerythritol triacrylate.

To optimize the dispersion a dispersant is preferably added to the dispersion medium. Any commonly known dispersant may be used. A preferred dispersant is a polymeric dispersant such as EFKA PX4733, EFKA PX4703, and EFKA PX4701 available from BASF and BYKJET 9151 available from BYK.

The laser markable composition may comprise more than one leuco dye. Using two, three or more leuco dyes

may be necessary to realize a particular colour. Also, it has been observed that more stable dispersions may be obtained when two, three or more leuco dyes are used.

The amount of the leuco dye in the dispersion is preferably in the range from 5 to 25 wt%, more preferably in the range from 10 to 20 wt%.

The amount of the leuco dye in the radiation curable laser markable composition is preferably in the range from 0.5 and 20 wt%, more preferably in the range from 1 to 10 wt%, relative to the total weight of the composition.

After applying the composition on a support, the amount of leuco dye is preferably in the range from 0.05 to 2 $g/m^2$, more preferably in the range from 0.1 to 1 $g/m^2$.

## Developing agent

The radiation curable laser markable composition preferably comprises a developing agent.

A developing agent is capable of reacting with a colourless leuco dye resulting in the formation of a coloured dye upon laser marking. Typically, upon laser marking a compound is released that may react with a leuco dye thereby forming a coloured dye.

All publicly-known photo- or thermal acid generators can be used as developing agent. Thermal acid generators are for example widely used in conventional photoresist material. For more information see for example "Encyclopaedia of polymer science", 4th edition, Wiley or "Industrial Photoinitiators, A Technical Guide", CRC Press 2010.

Preferred classes of photo- and thermal acid generators are iodonium salts, sulfonium salts, ferrocenium salts, sulfonyl oximes, halomethyl triazines, halomethylarylsulfone, $\alpha$-haloacetophenones, sulfonate esters, t-butyl esters, allyl substituted phenols, t-butyl carbonates, sulfate esters, phosphate esters and phosphonate esters.

Particularly preferred developing agents have a structure according to Formula (I)

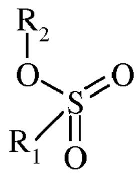

Formula I

wherein

R1 represent an optionally substituted alkyl group, an optionally substituted (hetero)cyclic alkyl group, an optionally substituted alkanyl group, an optionally substituted alkenyl group, an optionally substituted alkynyl group, an optionally substituted (hetero)aryl group, an optionally substituted aralkyl group, an optionally substituted alkoxy group, an optionally substituted (hetero)cyclic alkoxy group, or an optionally substituted (hetero)aryl group.

R2 represent an optionally substituted alkyl, an optionally substituted aliphatic (hetero)cyclic alkyl group or an optionally substituted aralkyl group;

R1 and R2 may represent the necessary atoms to form a ring.

Such developing agents according to Formula I and their preparation are disclosed in WO2015/091688.

The amount of the developing agent in the radiation curable composition is preferably in the range from 0.5 to 25 wt%, more preferably in the range from 1 to 15 wt%, most preferably in the range from 2.5 to 10 wt%, relative to the total weight of the composition.

After applying the composition on a support, the amount of the developing agent is preferably in the range from 0.05 to 2.5 $g/m^2$, more preferably in the range from 0.10 to 1.50 $g/m^2$, most preferably in the range from 0.25 to 1.00 $g/m^2$.

## Optothermal converting agent

An optothermal converting agent generates heat upon absorption of radiation.

The optothermal converting agent preferably generates heat upon absorption of infrared (IR) radiation, more preferably near infrared (NIR) radiation.

Near infrared radiation has a wavelength between 750 and 2500 nm.

Optothermal converting agents may be an infrared radiation absorbing dye but is preferably an infrared radiation absorbing pigment, or a combination thereof.

Infrared radiation absorbing inorganic pigments

A preferred inorganic infrared absorber is a copper salt as disclosed in WO2005/068207 (DATALASE).

Another preferred inorganic infrared absorber is a non-stoichiometric metal salt, such as reduced indium tin oxide as disclosed in WO2007/141522 (DATALASE).

Particular preferred inorganic infrared absorbers are tungsten oxide or tungstate as disclosed in WO2009/059900 (DATALASE) and WO2015/015200 (DATALASE). A lower absorption in the visible region while having a sufficient absorption in the near infrared region is an advantage of these tungsten oxide or tungstate.

Carbon black

A particularly preferred infrared radiation absorbing pigment (IR pigment) is carbon black, such as acetylene black, channel black, furnace black, lamp black, and thermal black.

Due to its light absorption in the visible region, i.e. between 400 nm and 700 nm, a too high amount of carbon black may result in an increase of the background colour of the printed laser markable composition.

For that reason, the amount of carbon black is preferably less than 10.000 ppm, more preferably less than 1000 ppm, most preferably less than 500 ppm, all relative to the total weight of the composition.

After applying the composition on a support, the amount of carbon black is preferably less than 0.1 g/$m^2$, more preferably less than 0.01 g/$m^2$, most preferably less than 0.005 g/$m^2$.

Carbon black is preferably added to the radiation curable laser markable composition as a dispersion.

The carbon black dispersion may be prepared by all commonly known dispersion methods.

A preferred method is a mechanical dispersion method including a bead milling step.

In such a method, the carbon black is mixed with a dispersion medium to obtain a suspension. That suspension is then grinded in a bead mill to obtain a stable dispersion having a particle size below 1 $\mu$m.

The particle size of the carbon particles is preferably in the range from 30 to 800 nm, more preferably in the range from 40 to 500 nm, most preferably in the range from 50 to 300 nm.

The dispersion medium preferably includes a polymerizable compound, preferably an acrylate.

The acrylate monomers are preferably selected from the group consisting of isobornylacrylate (IBOA), dipropylene glycol diacrylate (DPGDA), pentaerythritol triacrylate and 2-(2-vinyloxyethoxy)ethyl acrylate (VEEA).

To realize stable dispersions, a dispersant is preferably added to the dispersion medium. Any commonly known dispersant may be used. A preferred dispersant is a polymeric dispersant such as Efka PX4701, available from BASF.

Examples of suitable carbon blacks are Special black 250, Special black 100, Printex G, Lamp Black 101, Printex 25, Printex A, Hiblack 40B2, XPB 545 all from Orion; and Raven 410, Raven 14 all from Birla Carbon.

Infrared radiation absorbing dyes

An advantage of Infrared absorbing dyes (IR dyes) compared to IR pigments is their narrow absorption spectrum resulting in less absorption in the visible region. This may be of importance for the processing of transparent resin based articles where optical appearance is of importance.

A narrow absorption band is also mandatory for multicolour laser marking using multiple laser each having a different emission wavelength, as disclosed in for example EP-A 3297838.

Any IR dye may be used, for example the IR dyes disclosed in "Near-Infrared Dyes for High Technology Applications" (ISBN 978-0-7923-5101-6).

Preferred IR dyes are polymethine dyes due to their low absorption in the visible region and their selectivity, i.e. narrow absorption peak in the infrared region. Particular preferred polymethine IR dyes are cyanine IR dyes.

Preferred IR dyes having an absorption maximum of more than 1100 nm are those disclosed in EP-A 2722367, paragraphs [0044] to [0083] and WO2015/165854, paragraphs [0040] to [0051].

IR dyes having an absorption maximum between 1000 nm and 1100 nm are preferably selected from the group consisting of quinoline dyes, indolenine dyes, especially a benzo[cd]indoline dye. A particularly preferred IR dye is 5-[2,5-bis[2-[1-(1-methylbutyl)-benz[cd]indol-2(1H)-ylidene]ethylidene]-cyclopentylidene]-1-butyl-3-(2-methoxy-1-methylethyl)- 2,4,6(1H,3H,5H)-pyrimidinetrione (CASRN 223717-84-8) represented by the Formula IR-1, or the IR dye represented by Formula IR-2:

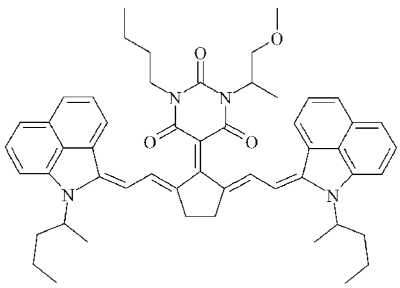

IR-1

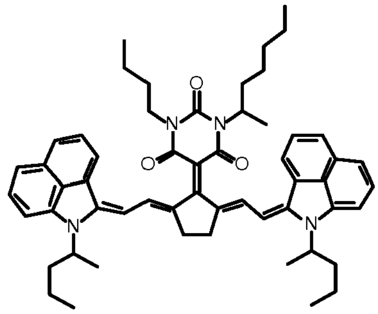

IR-2

Both IR dyes IR-1 and IR-2 have an absorption maximum λmax around 1052 nm making them very suitable for a Nd-YAG laser having an emission wavelength of 1064 nm.

Other preferred NIR absorbing compounds are those disclosed in WO2019/007833, paragraph [0034] to [0046]. It has been observed that these NIR absorbing compounds have a better daylight stability compared to the IR dyes described above and are therefore more suitable to be used in UV curable compositions.

A combination of different optothermal converting agents may also be used.

The amount of optothermal converting agent is preferably at least $10^{-10}$ g/m$^2$, more preferably between 0.0001 and 0.5 g/m$^2$, most preferably between 0.0005 and 0.1 g/m$^2$.

Polymerizable compound

The radiation curable laser markable composition comprises at least one polymerizable compound.

The polymerizable compounds may be monomers, oligomers or prepolymers.

The polymerizable compounds may be free radical polymerizable compounds or cationic polymerizable compounds.

Cationic polymerization is superior in effectiveness due to lack of inhibition of the polymerization by oxygen, however it is expensive and slow, especially under conditions of high relative humidity. If cationic polymerization is used, it is preferred to use an epoxy compound together with an oxetane compound to increase the rate of polymerization.

Preferred monomers and oligomers are those listed in paragraphs [0103] to [0126] of EP-A 1911814.

Radical polymerization is the preferred polymerization process. Preferred free radical polymerizable compounds include at least one acrylate or methacrylate group as polymerizable group, referred to herein as (meth)acrylate monomers, oligomers or prepolymers. Due to their higher reactivity, particularly preferred polymerizable compounds are acrylate monomers, oligomers or prepolymers.

Other preferred (meth)acrylate monomers, oligomers or prepolymers are N-vinylamides, such as N-vinylcaprolactam and acryloylmorpholine.

Particular preferred (meth)acrylate monomers, oligomers or prepolymers are selected from the group consisting of tricyclodecanedimethanol diacrylate (TCDDMDA), isobornyl acrylate (IBOA), dipropylene glycol diacrylate (DPGDA), ethoxylated [4] bisphenol diacrylate and urethane acrylate.

Photoinitiator

The radiation curable laser markable composition preferably contains a photoinitiator. The initiator typically initiates the polymerization reaction. The photoinitiator may be a Norrish type I initiator, a Norrish type II initiator or a photo-acid generator, but is preferably a Norrish type I initiator, a Norrish type II initiator or a combination thereof.

A preferred Norrish type I-initiator is selected from the group consisting of benzoinethers, benzil ketals, α,α-dialkoxyacetophenones, α-hydroxyalkylphenones, α-aminoalkylphenones, acylphosphine oxides, acylphosphine sulphides, α-haloketones, α-halosulfones and α-halophenylglyoxalates.

A preferred Norrish type II-initiator is selected from the group consisting of benzophenones, thioxanthones, 1,2-diketones and anthraquinones.

Suitable photo-initiators are disclosed in CRIVELLO, J.V., et al. VOLUME III: Photoinitiators for Free Radical Cationic & Anionic Photopolymerization. 2nd edition. Edited by BRADLEY, G.. London,UK: John Wiley and Sons Ltd, 1998. p.287-294 .

A preferred amount of photoinitiator is 0.3 - 20 wt% of the total weight of the radiation curable composition, more preferably 1 - 15 wt% of the total weight of the radiation curable composition.

In order to increase the photosensitivity further, the radiation curable composition may additionally contain co-initiators.

A preferred co-initiator is selected from the group consisting of an aliphatic amine, an aromatic amine and a thiol. Tertiary amines, heterocyclic thiols and 4-dialkylamino-benzoic acid are particularly preferred as co-initiator.

The most preferred co-initiators are aminobenzoates for reason of shelf-life stability of the radiation curable composition.

A preferred amount of photoinitiator is 0.3 - 20 wt% of the total weight of the radiation curable composition, more preferably 1 - 15 wt% of the total weight of the radiation curable composition.

The amount of co-initiator or co-initiators is preferably from 0.1 to 20.0 wt%, more preferably from 1.0 to 10.0 wt%, based in each case on the total weight of the radiation curable composition.

Polymerization Inhibitors

For improving the shelf-life, the radiation curable laser markable composition may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the sensitivity to curing, it is preferred that the amount capable of preventing polymerization is determined prior to blending. The amount of a polymerization inhibitor is preferably lower than 2 wt% of the total radiation curable laser markable composition.

Surfactant

The radiation curable laser markable composition may contain at least one surfactant. The surfactant(s) can be anionic, cationic, non-ionic, or zwitter-ionic and are usually added in a total quantity less than 5 wt%, more preferably less than 2 wt%, based on the total weight of the composition.

Preferred surfactants are selected from fluoro surfactants (such as fluorinated hydrocarbons) and/or silicone surfactants.

The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes. Preferred commercial silicone surfactants include BYK™ 333 and BYK™ UV3510 from BYK Chemie.

Silicone surfactants are often preferred in radiation curable laser markable composition, especially the reactive silicone surfactants, which are able to be polymerized together with the polymerizable compounds during the curing step.

Examples of useful commercial silicone surfactants are those supplied by BYK CHEMIE GMBH (including Byk™-302, 307, 310, 331, 333, 341, 345, 346, 347, 348, UV3500, UV3510 and UV3530), those supplied by TEGO CHEMIE SERVICE (including Tego Rad™ 2100, 2200N, 2250, 2300, 2500, 2600 and 2700), Ebecryl™ 1360 a polysilixone hexaacrylate from CYTEC INDUSTRIES BV and Efka™-3000 series (including Efka™-3232 and Efka™-3883) from EFKA CHEMICALS B.V..

Inorganic filler

The laser markable composition preferably comprises at least 1 wt% of an inorganic filler, relative to the total weight of the composition.

Examples of inorganic fillers that may be used are selected from the group consisting of calciumcarbonate, clays, alumina trihydrate, talc, mica, and calcium sulphate.

Preferably, an inorganic nanofiller is used to obtain optimal transparency of the laser markable composition. A preferred nanofiller is nanosilica.

Nanosilica as referred to herein consist of amorphous silicon dioxide particles having a nano-particle size.

To obtain optimal transparency of the laser markable composition the particle size of the nanosilica is preferably in the range from 5 to 250 nm, more preferably in the range from 7.5 to 100 nm, most preferably in the range from 10 to 50 nm.

Preferably dispersions of nanosilica in acrylate monomers are used. Such commercially available dispersions are for example the Nanocryl® nanosilica dispersions available from Evonik.

The amount of the inorganic filler is preferably in the range from 1 to 15 wt%, more preferably in the range from 2 to 10 wt%, most preferably in the range from 2.5 and 7.5 wt%, all relative to the total weight of the composition.
After applying the composition on a support, the amount of the inorganic filler is preferably in the range from 0.1 to 1.5 $g/m^2$, more preferably in the range from 0.2 to 1 $g/m^2$, most preferably in the range from 0.25 to 0.75 $g/m^2$.

## Method of preparing a laser markable article

The method of preparing a laser markable article comprises the steps of:

- applying the radiation curable laser markable composition as described above on a support;
- curing the applied composition.

The radiation curable laser markable composition may be provided onto a support by co-extrusion or any conventional coating technique, such as dip coating, knife coating, extrusion coating, spin coating, spray coating, slide hopper coating and curtain coating.
The radiation curable laser markable composition may also be provided onto a support by any printing method such as intaglio printing, screen printing, flexographic printing, offset printing, inkjet printing, rotogravure printing, etc. Using a printing method is preferred when only a part or several parts of a support has to be provided with a laser markable layer.
The radiation curable laser markable composition is preferably applied by flexographic printing or inkjet printing.
The thickness of the applied radiation curable laser markable composition is preferably 50 μm or less, more preferably 20 μm or less, most preferably 10 μm or less.

### Support

The radiation curable laser markable may be applied on any type of surface, for example a metallic support, a glass support, a polymeric support, or a paper support. The radiation curable laser markable may also be applied on a textile surface.
The support may be provided with a primer to improve the adhesion between the support and the laser markable composition.
A primer containing a dye or a pigment, for example a white primer, may also be provided on the support, for example to improve the contrast of the laser marked image.
The support may be a paper support, such as plain paper or resin coated paper, e.g. polyethylene or polypropylene coated paper.
There is no real limitation on the type of paper and it includes newsprint paper, magazine paper, office paper, or wallpaper but also paper of higher grammage, usually referred to as paper boards, such as white lined chipboard, corrugated (fiber) board and packaging board.
Also, so-called synthetic papers, such as the Synaps™ synthetic papers from Agfa Gevaert, which are opaque polyethylene terephthalate sheets, may be used as support.
Suitable polymeric supports include cellulose acetate propionate or cellulose acetate butyrate, polyesters such as polyethylene terephthalate and polyethylene naphthalate, polyamides, polycarbonates, polyimides, polyolefins, polyvinylchlorides, polyvinylacetals, polyethers, polysulfonamides, polylactide (PLA) and polyimide.
A preferred polymeric support is a biaxially stretched polyethylene terephthalate foil (PET-C foil) due to its very high durability and resistance to scratches and chemical substances.
The manufacturing of PET-C foils and supports is well-known in the art of preparing suitable supports for silver halide photographic films. For example, GB 811066 (ICI) teaches a process to produce biaxially oriented polyethylene terephthalate foils and supports.
Another preferred polymeric support includes (co)polyesters based on cyclohexyldimethanol (CHDM).
Thermoplastic polyesters containing CHDM exhibit enhanced strength, clarity, and solvent resistance. The exact properties of the polyesters vary from the high melting crystalline poly(1,4-cyclohexylenedimethylene terephthalate), PCT, to the non-crystalline copolyesters with the combination of ethylene glycol and CHDM in the backbone. The properties of these polyesters is also dependent on the cis/trans ratio of the CHDM monomer. CHDM has low melting point and reduces the degree of crystallinity of PET homopolymer, improving its processability. With improved processability, the polymer tends to degrade less to acetaldehyde and other undesirable degradation products. The copolymer with PET is known as glycol-modified polyethylene terephthalate, PETG. PETG is used in many fields, including electronics, automobiles, barrier, and medicals etc.
Another preferred polymeric support includes (co)polyesters based on 2,5-furandicarboxylic acid (FDCA). Such PEF films have, compared to standard PET films, a 10x higher oxygen barrier, a 2~3 x higher water vapor barrier, an

improved mechanical strength and are fully transparent.

Other polymeric supports include copolyesters based on isosorbide, e.g. copolymers of terephtalic acid and ethylene glycol and isosorbide.

The polymeric support may be a single component extrudate or co-extrudate. Examples of suitable co-extrudates are PET/PETG and PET/PC.

There is no restriction on the shape of the support. It can be a flat sheet, such as a paper sheet or a polymeric film or it can be a three dimensional object like e.g. a plastic coffee cup.

The three dimensional object can also be a container like a bottle or a jerry-can for including e.g. oil, shampoo, insecticides, pesticides, solvents, paint thinner or other type of liquids.

The laser markable composition may also be applied on a so-called shrink foil. Such a foil shrinks tightly over whatever it is covering when heat is applied.

The most commonly used shrink foils are polyolefin foils, i.e. polyethylene or polypropylene foils. However, other shrink foils include PCV.

## Laser markable article

The laser markable article is prepared by the method described above.

The laser markable article is preferably selected from the group consisting of a packaging, a foil, a laminate, a security document, a label, a decorative object and an RFID tag.

## Packaging

The laser marking method according to the present invention is preferably used to laser mark a packaging.

Laser marking is typically used to add variable data, for example batch numbers, expiry dates, addressees, etc. on the packaging.

Preferably laser marking is carried out in-line in the packaging process.

The laser marked "image" on a packaging may comprises data, images, barcodes, QR codes, or a combination thereof.

An advantage of using laser marking in a packaging process is the ability to mark information through a wrapping foil, for example the flavour-protective foil used for cigarette packs. In such a way, variable data may be provided on the cigarette packs after the protective foil has already been provided.

Another preferred laser markable packaging is used for pharmaceutical packaging. For pharmaceutical packaging, track and trace requirements become more and more demanding to comply with the ever evolving legislation.

Another advantage of using laser marking instead of another printing technique, such as inkjet printing, is the absence of any chemicals in the marking process. Especially for pharmaceutical and food packaging, the absence of chemicals in the packaging line is a great advantage.

By selecting a proper leuco dye, or a mixture of leuco dyes, the package may be provided with data or images in any colour.

A preferred packaging is folded cardboard or corrugated cardboard laminated with paper. Such packaging is preferably used for cosmetics, pharmaceuticals, food or electronics.

Multiple colour, even full colour, images may be obtained when the packaging is provided with multiple laser markable compositions, each containing a different leuco dye and optothermal converting agent, as disclosed in EP-A2719540 (Agfa Gevaert) and EP-A 2719541 (Agfa Gevaert).

## Security Documents

The laser marking method may also be used to prepare security documents, such as for example ID cards.

Typically, laser markable security documents are prepared by laminating a laser markable foil or laminate, optionally together with other foils or laminates, onto one or both sides of a core support.

Such laser markable security documents and their preparation have been disclosed in for example WO2015/091782 (Agfa Gevaert).

The laser markable laminate may be prepared by providing a laser markable composition according to the present invention on a support. The support is described above and is preferably a transparent polymeric support.

The laser markable laminate may comprise more than one laser markable layers or may comprise additional layers such as an ink receiving layer, a UV absorbing layer, intermediate layers or adhesion promoting layers.

The laser markable laminate is typically laminated on one or both sides of a core support using elevated temperatures and pressures.

Preferred core supports are disclosed in WO2014/057018 (Agfa Gevaert), paragraphs [0112] to [0015].

The lamination temperature depends on the type of core support used. For a polyester core, lamination temperatures are preferably between 120 and 140°C, while they are preferably above 150°C - 160°C for a polycarbonate core.

## Laser marking

In principle any laser may be used in the laser marking step. Preferred lasers are ultraviolet (UV) and infrared (IR) lasers, infrared laser being particularly preferred.
The infrared laser may be a continuous wave or a pulsed laser.
To produce high resolution laser marked data, it is preferred to use a near infrared (NIR) laser having an emission wavelength between 750 and 2500, preferably between 800 and 1500 nm in the laser marking step.
A particularly preferred NIR laser is an optically pumped semiconductor laser. Optically pumped semiconductor lasers have the advantage of unique wavelength flexibility, different from any other solid-state based laser. The output wavelength can be set anywhere between about 920 nm and about 1150 nm. This allows a perfect match between the laser emission wavelength and the absorption maximum of an optothermal converting agent present in the laser markable layer.
A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.
Laser marking may also be carried out using a so-called Spatial Light Modulator (SLM) as disclosed in WO2012/044400 (Vardex Laser Solutions).

## Curing

The radiation curable laser markable composition can be cured by exposing them to actinic radiation, such as electron beam or ultraviolet radiation.
Preferably, the radiation curable laser markable composition is cured by exposing it to ultraviolet radiation, more preferably using UV LED curing.

## EXAMPLES

## Materials

All materials used in the following examples were readily available from standard sources such as ALDRICH CHEMICAL Co. (Belgium) and ACROS (Belgium) unless otherwise specified.
**YR** is an abbreviation used for RED-40, a magenta leuco dye from Yamamoto chemicals.
**CpTs** is an abbreviation for cyclohexyl p-toluenesulfonate with the CAS number 953-91-3 from Chemgo.
**Genocure DMHA** is a photoinitiator from RAHN AG.
**Omnirad 481** is a photoinitiator from IGM Resins b.v.
**Speedcure TPO** is a photoinitiator from Lambson Limited.
**Sartomer 833S** is tricyclodecanedimethanol diacrylate (TCDDMDA, a difunctional acrylic monomer from Arkema.
**Photomer 4012** is isobornyl acrylate (IBOA), a monofunctional acrylic monomer from IGM.
**AB203930** is pentaerythritol triacrylate, a trifunctional acrylic monomer from abcr GmbH.
**Sartomer 508** is dipropylene glycol diacrylate, a difunctional acrylic monomer from Arkema.
**CN9245** is a urethane acrylate oligomer from Arkema.
**BYK-UV 3510** is a surface additive from BYK-Chemie GmbH.
**CTO** is an inorganic pigment of cesium tungsten oxide from Keeling & Walker Limited.
**Cupferron AL** is aluminum N-nitrosophenylhydroxylamine from WAKO CHEMICALS LTD.
**INHIB** is a mixture forming a polymerization inhibitor having a composition according to Table 1.

Table 1

| Component | wt% |
|---|---|
| Sartomer 508 | 82.4 |
| p-methoxyphenol | 4.0 |

(continued)

| Component | wt% |
|---|---|
| BHT | 10.0 |
| Cupferron AL | 3.6 |

**EFKA PX4733** is a high-molecular-weight dispersant from BASF SE.

**DISP1** is a concentrated pigment dispersion prepared as follows: 100.0 g of CTO pigment powder, 100.0 g of dispersant EFKA PX4733 and 5.0g of INHIB stabilizer were mixed into 295.0 g of Photomer 4012 using a DISPERLUX™ dispenser. Stirring was continued for 30 minutes. The vessel was connected to a DynoMill-RL mill filled with 200 g of 0.4 mm yttrium stabilized zirconia beads ("high wear resistant zirconia grinding media" from TOSOH Co.). The mixture was circulated over the mill for 108 minutes with a rotation speed of 4500 t/min. During the complete milling procedure the content in the mill was cooled to keep the temperature below 60°C. After milling, the dispersion was discharged into a vessel. The resulting concentrated pigment dispersion exhibited an average particle size of 131.0 nm as measured with a Malvern™ nano-S and a viscosity of 134.11mPa.s at 20°C and at a shear rate of 10 $s^{-1}$.

**DISP2** is a concentrated leuco dye dispersion prepared as follows: 2.0 g of YR leuco dye powder and 2.0 g of dispersant EFKA PX4733 were mixed into 36.0 g of AB203930 and introduced into a 100mL plastic container. The container was filled with 160 g or 3 mm yttrium stabilized zirconia beads ("high wear resistant zirconia grinding material" from TOSOH Co.). The container was sealed and placed on rotating rolls for 7 days. After milling, the dispersion is separated from the beads.

**OPV** is a concentrated solution prepared as follow: 0.50g of DISP1 and 4.50g of Sartomer 833S were added into a 30mL brown glass container with a plastic screw cap and stirred at 250rpm with a magnetic stirring bar at room temperature for 3 hours.

## Example 1

The coating solutions S1 and S2 were prepared by mixing the ingredients according to Table 2 expressed in grams in a 30 mL brown glass flasks with a plastic screw cap and stirred at 350 rpm with a magnetic stirring bar at room temperature overnight.

Table 2

| Ingredients (g) | S1 | S2 |
|---|---|---|
| **YR** | 0.25 | - |
| **CpTs** | 0.44 | = |
| **Genocure DMHA** | 0.42 | = |
| **Omnirad 481** | 0.42 | = |
| **Speedcure TPO** | 0.42 | = |
| **Sartomer 833S** | 1.26 | = |
| **AB203930** | 4.75 | - |
| **CN9245** | 0.95 | = |
| **Byk-UV 3510** | 0.10 | = |
| **OPV** | 1.00 | = |
| **DISP2** | - | 5.00 |

The solutions were then coated with a spiral bar coater (from Elcometer) using an automatic film applicator (Elcometer 4340 from Elcometer) at a speed of 20 mm/s on an A4 cardboard sheet (Incada Exel HS (GC2) NI 255 g/m2 510*720 mm SG 450 µm) at a wet coating thickness of 10 µm. The coatings were cured with 1 pass using a curing station (Aktiprint Mini 18 - 2.75cm belt, 230V, 50Hz from Technigraf GmbH) at a speed of 10m/min and with the lamp being at the second lowest position (second closest to the substrate).

The coatings were subsequently exposed to an infrared laser. The infrared laser was an optically pumped semiconductor laser emitting at 1064 nm (Genesis MX 1064-10000 MTM from COHERENT) with a maximum power of

4.0W, a spot size in X of 78.9 μm at $1/e^2$ and a spot size in Y of 90.6 μm at $1/e^2$. The used laser settings are represented in Table 3. The addressability is the distance between dots centre to centre and the energy density was calculated assuming no overlap according to the following formula:

$$\text{Energy density } [\text{J.cm}^{-2}] = \frac{\text{Power [W] x Period [s]}}{\text{Spot area } [\text{cm}^2]}$$

Table 3

| | P1 | P2 |
|---|---|---|
| **Type** | Vector Graphics | Vector Graphics |
| **Size [mm x mm]** | 6.0 x 6.02 | = |
| **Resolution [dpi]** | 1270 | = |
| **Repetition Y** | 300 | = |
| **Increment Y [mm]** | 0.02 | = |
| **Adressability [mm]** | / | / |
| **Speed [mm/s]** | 800 | = |
| **Frequency [kHz]** | 40.0 | = |
| **Pulse Length [μm]** | 13 | 25 |
| **Power [W]** | 2.58 | 2.81 |
| **Energy Density [mJ/cm$^2$]** | 1150 | 1250 |

The densities of each sample were measured two times with a X-Rite™ eXact spectrophotometer with the density standard ANSI A. The densities Dc, Dm, Dy and Db correspond respectively to the densities in cyan, magenta, yellow and black according to the density filters of ANSI A. The density Dm was of more interest because here the laser marks are magenta. Measurements were done for both the laser marks and the areas of the inks that were not exposed to the laser (background).

The contrast C and the evolution of the contrast ΔC were calculated as follow:

$$C = Dm \text{ (laser mark)} - Dm \text{ (background)}$$

$$\Delta C = \frac{C_{t=1week} - C_{t=0}}{C_{t=0}} \times 100$$

The colour response towards laser marking and the background of the samples were assessed by measuring the Dm of the background and of the laser mark. For each sample, these measurements were done on the same area overtime. The samples were left in a ventilated oven at 50°C for a week.

Table 4

| Coating | Dispersion | Laser settings | ΔC after 1 week at 50°C [%] |
|---|---|---|---|
| **S1** | No | P1 | -40.54 |
| **S2** | Yes | P2 | -0.21 |

It is clear from the results from Table 4 that the stability of the coating prepared from a composition comprising a dispersed leuco dye is much better compared to the stability of the coatings prepared from a composition comprising solubilized leuco dyes.

## Claims

1. A radiation curable laser markable composition comprising a polymerizable compound, a leuco dye, a developing agent and an optional optothermal converting agent, **characterized in that** the leuco dye is included in the composition as a dispersion.

2. The composition according to claim 1 wherein the amount of the leuco dye is in the range from 0.5 to 20 wt% relative to the total weight of the composition.

3. The composition according to claims 1 or 2 wherein the optothermal converting agent is an infrared absorbing compound.

4. The composition according to claim 3 wherein the infrared absorbing compound is a pigment.

5. The composition according to claim 4 wherein the pigment is carbon black or Cesium Tungsten Oxide.

6. The composition according to any of the preceding claims further comprising a developing agent.

7. The composition according to claim 6 wherein the developing agent has a chemical structure according to Formula I,

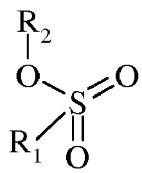

Formula I

wherein

R1 represent an optionally substituted alkyl group, an optionally substituted (hetero)cyclic alkyl group, an optionally substituted alkanyl group, an optionally substituted alkenyl group, an optionally substituted alkynyl group, an optionally substituted (hetero)aryl group, an optionally substituted aralkyl group, an optionally substituted alkoxy group, an optionally substituted (hetero)cyclic alkoxy group, or an optionally substituted (hetero)aryl group;
R2 represent an optionally substituted alkyl, an optionally substituted aliphatic (hetero)cyclic alkyl group or an optionally substituted aralkyl group;
R1 and R2 may represent the necessary atoms to form a ring.

8. A method of preparing the radiation curable laser markable composition as defined in any of the preceding claims comprising the steps of:

- preparing a leuco dye dispersion by dispersing a leuco dye in a dispersion medium;
- mixing the leudo dye dispersion with a polymerizable compound, a developing agent and an optional thermal converting agent.

9. The method according to claim 8 wherein the dispersion medium includes a polymerizable compound.

10. The method according to claim 9 wherein the polymerizable compound of the dispersion medium is pentaerythritol triacrylate.

11. The method according to any of the claims 8 to 10 wherein the dispersion medium further comprises a dispersant.

**12.** A laser markable article comprising a radiation curable laser markable composition as defined in any of the claims 1 to 7 on a support.

**13.** A method of preparing the laser markable article as defined in claim 12 including the step of providing a radiation curable laser markable composition as defined in any of the claims 1 to 7 on a support.

**14.** The method according to claim 13 further comprising a curing step.

**15.** A method of laser marking comprising the step of exposing the laser markable article as defined in claim 12 with an infrared laser.

Europäisches Patentamt
European Patent Office
Office européen des brevets

# EUROPEAN SEARCH REPORT

Application Number
EP 19 20 2702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 3 219 503 A1 (AGFA-GEVAERT [BE]) 20 September 2017 (2017-09-20)<br>* paragraphs [0001], [0020] - paragraph [0275]; claims 1-15 *<br>----- | 1-9, 11-15<br>10 | INV.<br>B41M5/323<br>B41M5/333<br>C09D11/00 |
| X<br><br>A | JP H07 304260 A (MITSUBISHI PAPER MILLS LTD) 21 November 1995 (1995-11-21)<br>* paragraphs [0001], [0007] - paragraph [0083]; claims 1,2 *<br>----- | 1,2,6-15<br><br>3-5 | ADD.<br>B41M5/337 |
| | | | TECHNICAL FIELDS SEARCHED (IPC) |
| | | | B41M<br>C09D |

The present search report has been drawn up for all claims

1

| Place of search | Date of completion of the search | Examiner |
|---|---|---|
| Munich | 14 April 2020 | Patosuo, Susanna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 20 2702

This annex lists the patent family members relating to the patent documents cited in the above-mentioned European search report. The members are as contained in the European Patent Office EDP file on
The European Patent Office is in no way liable for these particulars which are merely given for the purpose of information.

14-04-2020

| Patent document cited in search report | Publication date | Patent family member(s) | Publication date |
|---|---|---|---|
| EP 3219503 A1 | 20-09-2017 | EP 3219503 A1 | 20-09-2017 |
| | | US 2019232699 A1 | 01-08-2019 |
| | | WO 2017157888 A1 | 21-09-2017 |
| JP H07304260 A | 21-11-1995 | JP 3514864 B2 | 31-03-2004 |
| | | JP H07304260 A | 21-11-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008075101 A
- WO 2002074548 A
- WO 2007012578 A
- WO 2013014436 A
- WO 2015165854 A
- WO 2015091688 A
- WO 2005068207 A
- WO 2007141522 A
- WO 2009059900 A
- WO 2015015200 A
- EP 3297838 A
- EP 2722367 A
- WO 2019007833 A
- EP 1911814 A
- EP 2719540 A
- EP 2719541 A
- WO 2015091782 A
- WO 2014057018 A
- WO 2012044400 A


### Non-patent literature cited in the description


- Encyclopaedia of polymer science. Wiley
- Industrial Photoinitiators, A Technical Guide. CRC Press, 2010
- *Near-Infrared Dyes for High Technology Applications,* ISBN 978-0-7923-5101-6
- *CHEMICAL ABSTRACTS,* 223717-84-8
- **CRIVELLO, J.V. et al.** Photoinitiators for Free Radical Cationic & Anionic Photopolymerization. John Wiley and Sons Ltd, 1998, vol. III, 287-294
- *CHEMICAL ABSTRACTS,* 953-91-3